# EUROPEAN PATENT APPLICATION

(11) **EP 2 180 293 A2**
(43) Date of publication of application: **28.04.2010**
(21) Application number: 09170040.1
(22) Date of filing: 11.09.2009
(51) Int. Cl.: G01C 21/36

(54) **Improvements in Navigation Systems**

(30) Priority: 20.10.2008 GB 0819082
(71) Applicant: Nissan Motor Manufacturing (UK) Ltd., Cranfield Bedfordshire MK43 0DB (GB)
(72) Inventor: Picton, Richard, Cranfield Bedfordshire MK43 0DB (GB); Holmes, Malcolm, Cranfield, Bedfordshire MK43 0DB (GB); Picton, Christopher, Cranfield Bedfordshire MK43 0DB (GB); Oxtoby, David, Cranfield Bedfordshire MK43 0DB (GB)

(57) **Abstract**

A navigation system (10) comprising: receiver means (12) for receiving a user input (24) comprising speech; voice recognition means (14, 18) for identifying a first keyword (30) and a second keyword (32, 34) within said user input (24); means (14) for correlating said first keyword (30) to at least one geographical location stored in a database (20); means (14) for correlating said second keyword (32) to at least one of a time, a date, or an event; and means (22) for issuing a reminder (40) associated with said at least one geographical location on or before said time, date, or event associated with said second keyword (32).

## Description

The present invention relates to navigation systems, and in particular, but not exclusively, to a voice recognition reminder system for a satellite navigation system.

Modem passenger vehicles are often equipped with built in satellite navigation systems. Alternatively after-market navigation systems are becoming increasingly popular. These aftermarket navigation systems are typically hand-held devices which may be secured to the dashboard or windscreen of a vehicle using a cradle. Irrespective of the type of system it is usual for the system to allow the user to save a series of favourite locations, for example "Home" or "Work".

Additionally navigation systems are frequently shipped with a pre-installed database of locations including commercial establishments such as shops and restaurants and points of interest. These databases also include information regarding the nature of the goods or services on sale at particular commercial outlets.

The navigation system is therefore able to direct the user to the correct location in response to a request for a particular product or service of interest.

However, the efficacy of this system relies on the user remembering to input the product request at the correct time. Furthermore, the driver is often unable to input the request whilst driving. Both of these factors reduce the take up of the technology.

It is an object of the invention to at least mitigate some of the above problems.

According to one aspect of the present invention there is provided a navigation system comprising: receiver means for receiving a user input comprising speech; voice recognition means for identifying a first keyword and a second keyword within said user input; means for correlating said first keyword to at least one geographical location stored in a database; means for correlating said second keyword to at least one of a time, a date, or an event; and means for issuing a reminder associated with said at least one geographical location on or before said time, date, or event associated with said second keyword.

This system provides the advantage that the user can input tasks into the system verbally and as a result the user does not need to use their hands or be stationary for the system to receive new reminders.

In an example of the present invention there is provided a navigation system, wherein the first keyword may be a keyword relevant to a particular product or service and said identified geographical location is a location at which the product or service can be obtained.

In an example of the present invention there is provided a navigation system, wherein the second keyword may be a keyword relating to a specific location; and the navigation system identifies only those correlated geographical locations which are in the vicinity of said specific location.

In an example of the present invention there is provided a navigation system, wherein the first keyword is one or more of: a product; a service; a profession; a person, or an action, the second keyword is one or more of: a time; a date; a location; a point of interest; a destination; a journey or a route, and the reminder is issued in response to a time identified by the correlating means from the second keyword.

Additionally, the task may relate not only to a particular product, service, location, person or other data point stored within the database, but can also be time based.

In an example of the present invention there is provided a navigation system, wherein the system comprises means for identifying a further keyword relating to a time and/or date; wherein said personal reminder is issued on said date and/or at said time.

As a result tasks can be added in advance of their intended completion date or time. This means that the user is not dependant on remembering to perform a task at the correct time. Rather, the system will log an input relevant to a future task and remind the user at the appropriate time. The particular advantage of the system is that in addition to reminding the user of the task, the user is directed towards the appropriate location at the correct time in order to fulfil the task. For example, the user might need to buy milk on the way to work tomorrow. A task will be logged so that when the user sets the navigation system to take him to work the next day, the system will remind the user of the task and offer a selection of locations at which milk is available for purchase. This is especially advantageous as it not only reminds the user of the task but presents options for enabling completion of the task.

In an example of the present invention there is provided a navigation system, wherein the reminder is issued in response to the navigation system being in the vicinity of, or en-route to, a location identified by the navigation system as a suitable location to find the subject of the first keyword.

Advantageously this presents the user with the option of completing a task at a point along a suggested navigation route even before the journey has begun. For example, on setting a task to buy a particular book before flying from the airport the system will offer the user a range of outlets en-route to the airport before he or she even sets off from home. This allows for further advanced planning and task management.

In an example of the present invention there is provided a navigation system, wherein the reminder is issued depending on any user selected criteria from a list comprising: shortest distance; shortest time; mode of transport; most fuel efficient journey; most efficient grouping of subjects; most efficient grouping of events; avoidance of toll roads; use or avoidance of highways; accident avoidance; obstacle avoidance; subject preferences; driving condition preferences; repeated event, or vehicle condition.

Advantageously this presents the user with the option of completing a task in a way that best suits their mode of transport, road conditions or other factors that may otherwise increase their journey time.

Alternatively, when the navigation system is not following a navigation route, said means of issuing said personal reminder issues said reminder when approaching one of said geographical locations.

Advantageously this allows the user the maximum opportunity to complete a task as locations appropriate for the completion of a pending task which are in the vicinity of the vehicle are presented en-route, even when no navigation route is programmed.

In an example of the present invention there is provided a navigation system, wherein when the navigation system is following a navigation route, the personal reminder issues when said geographical location is identified on or near the navigation route.

Advantageously this improves the efficiency of the system by offering the user the opportunity to take advantage of each journey rather than requiring the user to make a journey specifically to complete their tasks.

In an example of the present invention there is provided a navigation system, wherein the means of issuing said reminder issues an audio speech reminder.

In an example of the present invention there is provided a navigation system, wherein the means of issuing said audio speech reminder comprises replaying the received user input.

Advantageously this serves to give the user the reminder without requiring them to look at the navigation device, allowing the user to pay full attention to the road or the route taken. Additionally, replaying the original spoken reminder input provides the advantage that the user may be acting on reminders left by several people. Hearing the voice of the individual who input the reminder will help the user determine who input the reminder. This may have an additional influence on which geographical location is visited, or if multiple reminders are being acted upon, in what order the user chooses to act upon them.

In an example of the present invention there is provided a navigation system, wherein the means of issuing said reminder comprises displaying a visual reminder on a display screen of said navigation system.

Advantageously this serves to provide the user with visual confirmation if they are operating the navigation system in a noisy environment such as in heavy traffic and believe they misheard the reminder initially. Additionally, if the navigation system is capable of operating in multiple modes, this serves to confirm which mode the navigation is currently operating in.

Preferably the means of issuing said reminder further comprises an audible sound when said reminder is displayed.

In an example of the present invention there is provided a navigation system, wherein the navigation system offers the user the option to navigate to said closest geographical location, when said reminder is issued.

In an example of the present invention there is provided a navigation system, wherein if the user accepts said offer to navigate to said closest geographical location when the navigation system is following a navigation route, the navigation system re-calculates said navigation route to include a deviation to said closest geographical location.

In an example of the present invention there is provided a navigation system, wherein if the user accepts said offer to navigate to said closest geographical location when the navigation system is following a navigation route, the navigation system re-calculates said navigation route to include a deviation to said geographical location in response to said user selected criteria.

Advantageously this provides the user with the convenient feature that it does not automatically dictate that the subject of the reminder need be completed immediately. However, if the user wishes to start acting upon the reminders they can do so simply by accepting the proposed route calculated by the navigation system.

In an example of the present invention there is provided a navigation system, wherein the navigation system takes the form of a portable hand-held device.

Advantageously this provides the user with the convenience of a navigation aid that may be used while walking, driving a car, riding a bicycle or using any other means of transport as the navigation may be moved from one vehicle to another.

In an example of the present invention there is provided a navigation system, wherein the navigation system is integrated into a vehicle.

Integrating the navigation aid into a vehicle offers the advantage that the specification, positioning and size of typical components such as: microphones, speakers, satellite navigation antennae, microprocessor, power supply and/or a display may all be optimised for the environment of a vehicle.

Embodiments of the invention will now be described, by way of example only, with reference to the Figures, in which:
Figure 1 is a schematic representation of the system according to the present invention.
Figure 2 is a schematic representation of the process of generating a reminder according to the present invention.

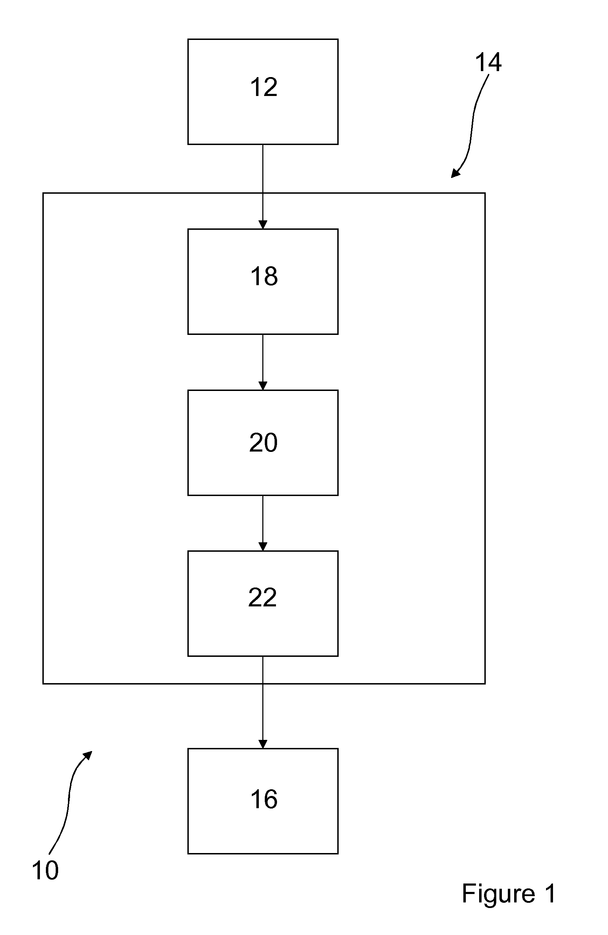

In Figure 1 a navigation system is shown indicated generally at 10. The system comprises a receiver in the form of a microphone 12, a microprocessor indicated generally at 14 and a speaker 16. The microphone 12 and speaker 16 are in communication with the microprocessor 14. The microprocessor contains voice recognition software indicated at 18 and a database 20. The database 20 contains data relating to the generation of navigation routes including but not limited to road infrastructure, points of interest, commercial outlet information, traffic status reports, weather information, personal favourites, personal address book. The microprocessor also contains a reminder generating algorithm 22, the purpose of which will be described in further detail shortly.

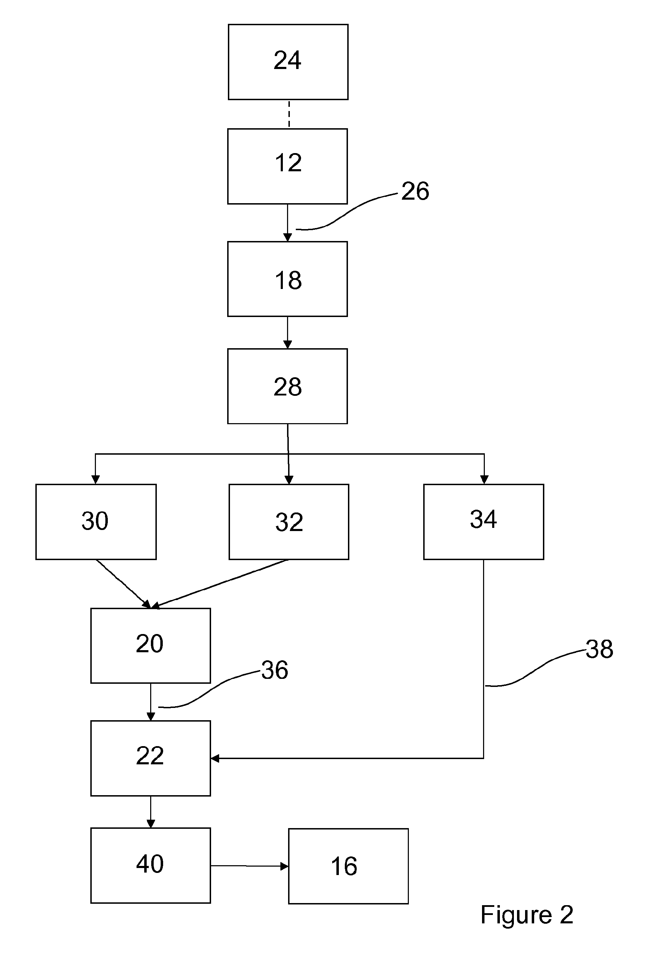

Referring now to Figure 2, the microphone 12 is positioned within a vehicle (not shown for clarity) where it can generate an audio signal 26 in response to a speech input 24 from the user. The audio signal 26 is received by the microprocessor 14 where the signal is interrogated by the speech recognition software 18 to generate one or more keywords 28. These keywords are then subdivided by the microprocessor 14 into those relating to product or service 30, location 32 and time or date 34. The keywords related to product or service 30 or location 32 are then correlated against the database 20 to find correlated data 36 relevant to the speech input 24 within the database 20. This correlated data takes the form of locations or navigation routes relevant to the user input. Likewise the keywords 34 related to date or time are converted by the microprocessor into time data 38.

The correlated data 36 and time data 38 are then manipulated by the reminder generating algorithm 22 in order to generate the reminder 40 which is subsequently delivered to the user at the correct time by the speaker 16.

Accordingly, in use, the driver of the vehicle or other user of the system inputs a reminder into the system 10 by stating, for example, "I need to buy flowers on the way home from work on Thursday". This statement is received by the microphone 12 and the associated audio signal is delivered to the voice recognition software 18 run on the microprocessor 14. The software 18 generates the following keywords "flowers", "home", "from", "work", "Thursday". Of those, "flowers" relate to product or service 30, "home", "from" and "work" relate to location 32 and "Thursday" relates to time or date 34. The terms "flowers", "home", "from" and "work" are correlated against the database 20 which contains location data saved by the user under "home" and "work", and pre-installed product location data for "flowers". The locations of "home" and "work" and "flowers" are exported to the reminder generating algorithm 22 as correlated data 36. Similarly time data 38 relevant to "Thursday" is received by the algorithm which takes separate product, location and time data and computes a reminder 40. The reminder 40 takes the form of data stored on the microprocessor memory. Upon selecting "home" on getting into the vehicle on Thursday evening the user is issued with a reminder 40 via the speakers 16 to buy flowers. The user is then asked whether he would like to be directed to an outlet selling flowers. In the event that there are several outlets selling flowers along the route, the user can be presented with a choice or offered the nearest as a default.

It will be appreciated that it is possible within the scope of the invention to deliver the reminders in text form rather than speech.

## Claims

1. A navigation system (10) comprising:
receiver means (12) for receiving a user input (24) comprising speech;
voice recognition means (14, 18) for identifying a first keyword (30) and a second keyword (32, 34) within said user input (24);
means (14) for correlating said first keyword (30) to at least one geographical location stored in a database (20);
means (14) for correlating said second keyword (32) to at least one of a time, a date, or an event; and
means (22) for issuing a reminder (40) associated with said at least one geographical location on or before said time, date, or event associated with said second keyword (32).

2. A navigation system (10) according to claim 1, wherein:
the first keyword (30) is one or more of: a product; a service; a profession; a person, or an action;
the second keyword (32) is one or more of: a time; a date; a location; a point of interest; a destination; a journey or a route, and
the reminder (40) is issued in response to a time identified by the correlating means (14) from the second keyword (32).

3. A navigation system (10) according to claim 1 or claim 2, wherein:
the reminder (40) is issued in response to the navigation system (10) being in the vicinity of, or en-route to, a location identified by the navigation system (10) as a suitable location to find the subject of the first keyword (30).

4. A navigation system (10) according to any of the preceding claims, wherein the reminder (40) is issued depending on any user selected criteria from a list comprising: shortest distance; shortest time; mode of transport; most fuel efficient journey; most efficient grouping of subjects; most efficient grouping of events; avoidance of toll roads; use or avoidance of highways; accident avoidance; obstacle avoidance; subject preferences; driving condition preferences; repeated event or vehicle condition.

5. A navigation system (10) according to any of the preceding claims, wherein when the navigation system (10) is not following a navigation route, the personal reminder (40) issues when approaching one of said geographical locations.

6. A navigation system (10) according to any of claim 1 to claim 5, wherein when the navigation system (10) is following a navigation route, the personal reminder (40) issues when said geographical location is identified on or near the navigation route.

7. A navigation system according to any of the preceding claims;
wherein the system comprises means (14, 18) for identifying a further keyword (34) relating to a time and/or date; and
wherein said personal reminder (40) is issued on said date and/or at said time.

8. A navigation system (10) according to any of the preceding claims, wherein the means of issuing said reminder (40) issues an audio speech reminder.

9. A navigation system (10) according to claim 8, wherein
the means of issuing said audio speech reminder (40) comprises replaying the received user input.

10. A navigation system (10) according to any of the preceding claims, wherein
the means of issuing said reminder (40) comprises displaying a visual reminder on a display screen of said navigation system (10).

11. A navigation system (10) according to any of the preceding claims, wherein the navigation system (10) offers the user the option to navigate to said closest geographical location, when said reminder (40) is issued.

12. A navigation system (10) according to claim 11, wherein if the user accepts said offer to navigate to said closest geographical location when the navigation system is following a navigation route, the navigation system re-calculates said navigation route to include a deviation to said closest geographical location.

13. A navigation system (10) according to claim 11 or claim 12, wherein if the user accepts said offer to navigate to said closest geographical location when the navigation system is following a navigation route, the navigation system re-calculates said navigation route to include a deviation to said geographical location in response to said user selected criteria.

14. A hand-held device comprising a navigation system (10) according to any of the preceding claims.

15. A vehicle comprising a device or a navigation system (10) according to any of the preceding claims.
